Europäisches Patentamt

**European Patent Office**

**Office européen des brevets**

(11) Publication number: **0 136 182**
A2

(12) **EUROPEAN PATENT APPLICATION**

(21) Application number: **84306609.3**

(22) Date of filing: **28.09.84**

(51) Int. Cl.⁴: **G 06 F 9/22**

(30) Priority: **29.09.83 US 537429**

(43) Date of publication of application: **03.04.85**
**Bulletin 85/14**

(84) Designated Contracting States: **AT BE CH DE FR GB IT LI NL SE**

(71) Applicant: **TANDEM COMPUTERS INCORPORATED, 19333 Vallco Parkway, Cupertino California 95014 (US)**

(72) Inventor: **Horst, Robert Whiting, 1538 Primrose Way, Cupertino California 95014 (US)**

(74) Representative: **Huntingford, David Ian et al, W.P. THOMPSON & CO. Coopers Building Church Street, Liverpool L1 3AB (GB)**

(54) **Multi level pipeline control store for cpu microsequencing.**

(57) The control store for a central processing unit is divided into two portions, a horizontal portion and a vertical portion. The vertical control store portion contains the information for the first phase of the pipeline as well as an address which is registered and used to address the horizontal control store portion which contains the second and later pipeline stage information. Multiple vertical control store portions share a common horizontal control store portion line resulting in compression.

- 1 -

## DESCRIPTION

## MULTI LEVEL PIPELINE CONTROL STORE FOR
## CPU MICROSEQUENCING

The present invention relates to data processing and to control storage architecture for central processing units. More particularly, the invention pertains to the configuration of the control store portion of a central processing unit (CPU) in a pipelined design.

Microcoded implementation of the control unit of a processor is known in the art. It has the benefits of providing for a more complex control structure which is at the same time more flexible than arbitrary control logic.

The regularity of the architecture of a control store used to store microcode also has the recognized benefits of allowing the circuit design to proceed before the microcode design is started and of taking up less physical space than arbitrary logic of the same capability.

In a microcode implementation, a macroinstruction is decoded to provide an address to the input of a control store memory which contains the microcode which is used to implement the microinstructions in the CPU hardware. Subsequent addresses to the control store may come from one of several sources which may include the next sequential address, return address stack, or the microcode branch field which causes branches within the microcode.

A horizontal control store, i.e., one which provides fully decoded fields, can be used to drive the execution unit with little or no logic interposed. However, the obvious disadvantage of a horizontal control store is that it must have a width exactly equal to the total width of the field used to drive the executing circuits in a CPU. In addition, horizontal microinstructions (or large portions of horizontal microinstruction bit fields) are often repeated one or more times in a control store. Both of these disadvantages tend to create a control store of a fairly large size. A large control store itself presents a timing problem due to capacitive loading on the address input lines of the memory devices.

. A vertical control store, i.e., one which provides highly encoded fields, tends to alleviate these problems since it tends to reduce the size of the control store. Unfortunately, the trade-off is not wholly advantageous since vertical microcode is highly encoded and thus requires a considerable amount of logic to decode the microinstructions. It also tends to require more microcycles to emmulate a given macroinstruction.

One partial solution to this dilemma has been to use a hybrid horizontal and vertical control store, or two-level control store. In such an arrangement a sequence of microinstructions implements a macroinstruction. Each microinstruction is a narrow vertical type microinstruction which acts as a pointer to a horizontal type microinstruction which is fairly wide and can provide direct decoded control. With this arrangement, only a single copy of the horizontal type microinstruction need be stored since the vertical pointer may always indicate the same horizontal microinstruction no matter how many times it needs to be accessed.

One drawback to this solution is that memory access takes time and so the accesses to the two control stores must take place in a sequential manner. Complex control timing techniques such as instruction prefetch, access overlap and multiple word access are used to compensate.

In many applications it is known to pipeline microinstructions sequences used to implement macroinstructions; that is, certain bit fields of microcode are used prior in time to other such fields as the actions caused by microinstructions execution propagate through the hardware of a processor. In simple terms, a part of the macroinstruction is executed prior to other parts and therefore must be available earlier in time.

Pipelining of instructions increases the instruction throughput of a system since during any time period when the early part of an instruction is being executed, the later part of a previous instruction is also being executed. It is thus desirable to utilize pipelining in order to maximize the potential instruction throughput in a processor.

It is also desirable to utilize a pipelined scheme in conjunction with a control store which provides maximum flexibility at as low a possible cost in additional hardware storage space and control complexity.

Therefore, it is an object of the present invention to provide an improved pipeline control store for CPU microsequencing.

In a system in accordance with the present invention, macroinstructions are decoded and used to provide the first address of a vertical control store which has two bit fields in its output. One bit field comprises a portion of direct decoded microcode field and is used to direct and execute a first rank of functions in a central processing unit. The second bit field comprises a highly encoded pointer to a horizontal control store address. The output of the horizontal control store is a bit field which may be fully decoded and used as the remaining portion of the

- 4 -

microcode field to direct and execute a second rank of functions in a central processing unit. A portion of the bit field comprising the output of the horizontal control store may be used to drive later ranks of functions and may be encoded or decoded.

The present invention enables the provision of a pipeline control store for CPU microsequencing which reduces the amount of memory utilized.

The invention also enables the provision of a multi level pipeline control store which reduces control store address loading for increased speed capability.

The present invention also enables the provision of a two level control store which takes advantage of microinstruction pipelining in order to reduce parts count without degradation of performance capability.

The invention is described further hereinafter, by way of example only, with reference to the accompanying drawings, wherein:

Figure 1 is a block diagram of a control store in accordance with one embodiment of the present invention; and

Figure 2 is a table showing propagation of four instructions through the pipeline of the control store of Figure 1.

An understanding of the present invention is facilitated by examining our concurrently filed copending European application Serial No., based on US Serial No. and to which reference is therefor hereby directed.

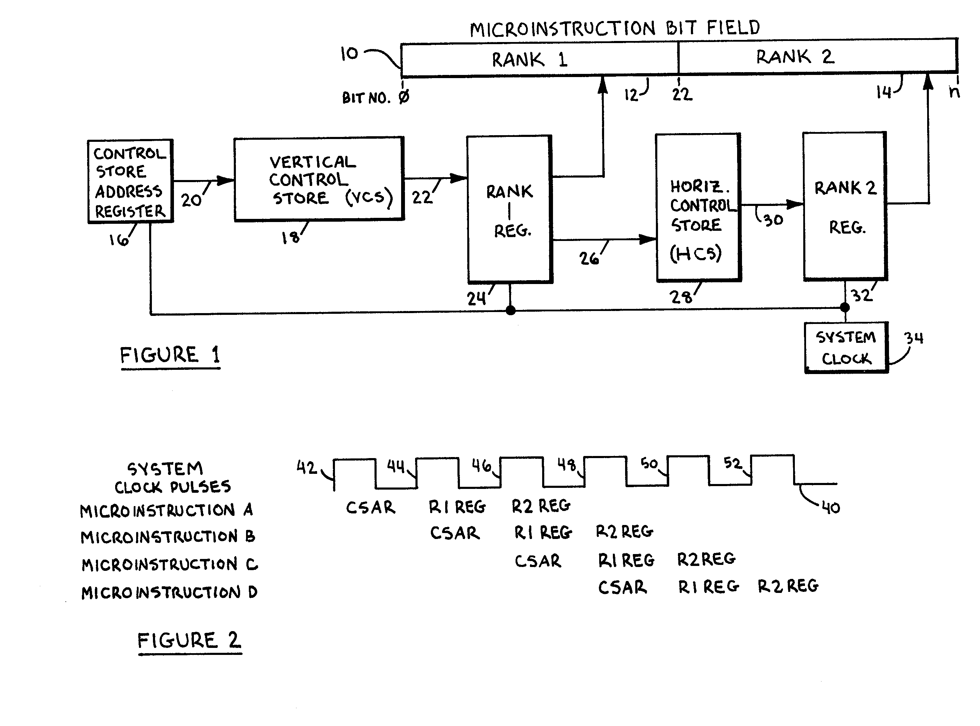

Referring to Figure 1 of the accompanying drawings, a representation of a microinstruction bit field 10 is depicted having a rank one portion 12 and a rank two portion 14. Rank one and two are a convenient way of designating functions which take

0136182

- 5 -

place at different times in a pipelined CPU, the rank one functions being executed prior to the rank two functions.

Microinstruction bit field 10 is generated as follows. A control store address register (CSAR) 16 contains the address of a microinstruction. This address is presented to vertical control store (VCS) 18 via lines 20. Those skilled in the art will recognize that lines 20 could alternatively be driven by other sources besides CSAR 16. For instance, a return stack, next macroinstruction vector or branch fields from microcode could drive lines 20 in addition to CSAR 16 means of a multiplexer or similar hardware.

VCS 18 is a memory device or a plurality of memory devices. The address range of VCS 18 is, of course, dependent on the number of address bits on lines 20 and is usually determined by the size of the instruction set which is to be implemented in microcode. The number of bits on the output of VCS 18 will likewise depend on the size of microinstruction bit field 10 and will vary from application to application as will the sizes, formats and capacities of the other elements of the invention without straying from its concept. For purposes of illustration only, it is assumed for purposes of the present example that the width of CSAR 16 will be 13 bits yielding a VCS 18 of 8K capacity (8192 bits). Again, for purposes of illustration only, the output 22 of VCS 18 will be 34 bits wide.

Output 22 of VCS 18 is placed in rank one register 24. The output of rank one register 24 is split into two portions. The first portion comprises the rank one microinstruction bit field 12 which is fully or nearly fully decoded depending on the architecture of the particular CPU with which it is to be used. In the embodiment of Figure 1, the rank one microinstruction bit field is 22 bits wide, although those skilled in the art will recognize that the size of this field is dependent on the particular application.

The second portion of the output of rank one register 24 is an encoded address on lines 26 which is used to access a horizontal control store (HCS) 28. By way of illustration only, lines 26 are a 12 bit address, making HCS 28 a 4K (4096 bit) memory. The width of HCS 28 is dependent on the particular application, but for purposes of this disclosure it may be assumed to be 71 bits wide on lines 30, which present the 71 bits to rank two register 32 where they are latched. The output of rank two register 32 forms the rank two microinstruction bit field 14. Registers 16, 24 and 32 are driven by a system clock 34.

Before turning to time considerations of the implementation of this embodiment of the present invention, it is noted that VCS 18 and HCS 28 may be constructed from random access memory (RAM), read only memory (ROM), or alterable read only memory (EPROM or EAROM). The consideration and consequences of selection of one of these types of memory is a matter of design choice beyond the scope of this invention but within the knowledge of those skilled in the art.

Referring now to Figure 2, the timing considerations of the control store arrangement of the present invention may best be understood. Figure 2 is a table which shows how four instructions propagate through the present control store.

CSAR 16, rank one register 24 (called R1REG in Figure 2), and rank two register 32 (called R2REG in Figure 2) are assumed to latch data on the rising edge of the system clock 34 of Figure 1. Clock pulses are shown diagrammatically at 40.

As can be seen from Figure 2, upon rising edge 42, MICROINSTRUCTION A is available in CSAR 16 and, after its access time delay, the output of VCS 18 is available to the input of rank one register 24 and is available at the output of rank one register 24 after rising edge 44. After rising edge 44 the rank one microcode bit field of MICROINSTRUCTION A is available for execution, MICROINSTRUCTION B has been clocked into instruction register 16, and after the access delay of HCS 28 the contents of the rank two microcode for MICROINSTRUCTION A is ready at the input of rank two register, awaiting clock pulse 46.

Following clock pulse 46, each item in the pipeline gets shifted one position further, i.e., MICROINSTRUCTION C enters CSAR 16, the rank one microcode bit field of MICROINSTRUCTION B is ready at the output of rank one register 24 and the rank two microcode bit field is ready at the output of rank two register 32.

Successive clock pulses 48, 50 and 52 act to shift these items successively down the pipeline, pushing the microcode fields for MICROINSTRUCTION A out of the pipeline as MICROINSTRUCTION D enters the pipeline.

While a preferred embodiment of the invention has been disclosed having a two rank pipeline, those skilled in the art will recognize that an embodiment having a greater number of ranks can be configured without departing from the present invention. In such cases a portion of the rank two bit field may act as an encoded address to a second horizontal control store thus adding a third rank, etc.

As has been mentioned, the sizes of the microcode bit fields depend solely on the requirements of the particular CPU architecture driven by the control

- 8 -

store of the present invention. In addition, those skilled in the art will recognize that customary parity bits may be added to the memory elements of the present invention, but have been left out in order not to overcomplicate the disclosure.

Those skilled in the art will recognize that the various registers and memory elements described herein can be made form any logic family, e.g., TTL, ECL, CMOS and the particular choice will be dictated by design considerations such as speed, density and drive capability. Likewise, the type of registers, e.g., shift registers, D-flip flops, latches, can be chosen arbitrarily without departing from the scope of this invention.

. . . . . . . . . . . . . . . . . . . . . . . . . . . . . . . . . . . . . . . . . . . . . . . . . . . . . . . . . . . . . . .

- 9 -

CLAIMS

1. A control store for storing microcode for use in implementing a set of microinstructions in a pipelined central processing unit of a data processing system characterised by the combination of a vertical portion (18) having a plurality of storage locations addressed by a set of inputs, each of said storage locations holding a decoded first rank (12) of microcode and an encoded vector to a decoded second rank (14) of microcode for a particular one of said set of microinstructions, said encoded vector and said first rank (12) of microcode appearing on separate sets of output lines in response to information on said set of inputs, and a horizontal portion (28) having a plurality of storage locations addressed by a set of inputs, the latter inputs being supplied with said encoded vector on one set of output lines (26) from said vertical portion (18), and said horizontal portion (28) supplying on a set of output lines said decoded second rank (14) of microcode.

. . . . . . . . . . . . . . . . . . . . . . . . . . . . . . . . . . . . . . . . . . . . . . . . . . . . . . . . .

MICROINSTRUCTION BIT FIELD

FIGURE 1

FIGURE 2